# EUROPÄISCHE PATENTANMELDUNG

(11) **EP 1 839 785 A2**
(43) Veröffentlichungstag der Anmeldung: **03.10.2007**
(21) Anmeldenummer: 07102902.9
(22) Anmeldetag: 22.02.2007
(51) Int. Cl.: B23B 13/02

(54) **Vorrichtung zur Halterung von Stangen und Drehmaschine mit einer solchen Vorrichtung**

(30) Priorität: 07.03.2006 DE 102006010359
(71) Anmelder: Diekmeyer, Stefan, 32339 Espelkamp (DE)
(72) Erfinder: Diekmeyer, Stefan, 32339 Espelkamp (DE)
(74) Vertreter: Dantz, Jan Henning

(57) **Zusammenfassung**

Eine Vorrichtung zur Halterung von Stangen, insbesondere für Drehmaschinen, umfasst mindestens eine Hülse (7), die in eine Hohlspindel einfügbar ist, wobei in der Hülse (7) eine Stange klemmend festlegbar ist. Zur Festlegung der Stange an der Innenseite der Hülse (7) sind elastische Mittel (12, 16) vorgesehen, die durch Druckbeaufschlagung eines Fluides gegen die Stange festklemmbar sind. An der radial äußeren Seite weist die Hülse (7) einen elastischen Wandabschnitt (8) auf, der gegen die umgebende Hohlspindel bewegbar ist. Dadurch kann eine Stange innerhalb einer Spindel auf einfache Weise fixiert und wieder freigegeben werden.

## Beschreibung

Die vorliegende Erfindung betrifft eine Vorrichtung zur Halterung von Stangen, insbesondere für Drehmaschinen, mit mindestens einer Hülse, die in eine Hohlspindel einfügbar ist, wobei in der Hülse eine Stange klemmend festlegbar ist, nach dem Oberbegriff des Patentanspruches 1. Des weiteren betrifft die Erfindung eine Drehmaschine nach dem Oberbegriff des Patentanspruches 12.

Die DE 7 339 154 zeigt eine Stangenführungsvorrichtung an einer Spannvorrichtung einer Drehmaschine, bei der ein Stangenführungsrohr eine Innenkleidung zum Mindern von Schwingungen aufweist. Dabei sind in regelmäßigen Abständen radial federnde Stützeinheiten vorgesehen. Nachteilig bei solchen Spannvorrichtungen ist, dass diese nur schlecht an verschiedene Durchmesser der festgelegten Werkstücke angepasst werden können. Zudem eigenen sich solche Stangenhalterungen nur schlecht für eine automatische Längsförderung der Stange, da die Klemmmittel dauerhaft an der Stange anliegen.

Eine ähnliche Vorrichtung zur Halterung von Stangenmaterial an einer Drehmaschine ist in der DE 7 607 386 gezeigt. Bei dieser Halterung sind in einer Maschinenspindel Hülsen mit Federelementen angeordnet, die das Stangenmaterial fixieren sollen. Diese Hülsen sind nur für bestimmte Durchmesser an Stangenmaterial wirksam und zudem wird das Schwingungsverhalten unterschiedlich langer Stangen nur schlecht berücksichtigt.

Die DE 28 22 569 C2 offenbart eine Einrichtung zum Zuführen von Werkstoffstangen für Drehautomaten, bei der außerhalb des Drehautomaten eine Stange an Ständern abgestützt wird, um ein Durchhängen zu vermeiden. Dabei ist eine Hülse vorgesehen, an der eine mit Öl beaufschlagbare Rohrmembran zur Anpressen an die Stange ausgebildet ist. Ein Einsatz der Einrichtung innerhalb des Drehautomaten ist nicht vorgesehen.

Es ist daher Aufgabe der vorliegenden Erfindung eine Vorrichtung zur Halterung von Stangen und eine Drehmaschine mit solch einer Vorrichtung zu schaffen, die auf einfache Weise unterschiedliche Durchmesser von Stangen festlegt.

Diese Aufgabe wird mit einer Vorrichtung mit den Merkmalen des Patentanspruches 1 gelöst. Des weiteren wird diese Aufgabe durch eine Drehmaschine mit den Merkmalen gemäß Patentanspruch 12 gelöst.

Erfindungsgemäß weist die Hülse zur Festlegung der Stange an der Innenseite elastische Mittel auf, die durch Druckbeaufschlagung eines Fluides gegen die Stange festklemmbar sind. Dadurch können die elastischen Mittel individuell gegen die Stange gepresst werden, wobei ein gewisser Toleranzausgleich im Hinblick auf den Durchmesser und die äußere Kontur der Stange erfolgen kann. Je nach Größe des Druckes können die elastischen Mittel von der Hülse weiter nach innen bewegt werden und auch die Anpresskraft kann über den Druck eingestellt werden. Ferner eignet sich diese Vorrichtung zur Halterung von Stangen auch für automatische Stangenfördermittel, da nach einem Lösen des Druckes die Stange wieder leichtgängig innerhalb einer Hohlspindel verschiebbar ist und anschließend eine automatische Zentrierung durch die Druckbeaufschlagung mit dem Fluid erfolgen kann.

Dabei weist die mit Fluid beaufschlagte Kammer der radial äußeren Seite mindestens einen elastischen Wandabschnitt auf, der gegen die umgebende Spindel bewegbar ist. Sobald die Vorrichtung zur Halterung von Stangen mit Druck beaufschlagt wird, erfolgt einerseits eine Fixierung der Stange und andererseits wird die Hülse auch außen an der rohrförmigen Spindel abgestützt. Dies gewährleistet eine exakte Zentrierung und vermindert Schwingungen.

Gemäß einer bevorzugten Ausgestaltung ist die Druckbeaufschlagung mit dem Fluid schaltbar. Dadurch kann über eine Steuerung manuell oder automatisch die Dauer der Fixierung je nach Bedarf eingestellt werden.

Gemäß einer weiteren Ausgestaltung der Erfindung ist an der mindestens einen Hülse ein nach innen bewegbarer elastischer Schlauchabschnitt angeordnet. Dadurch kann die Stange ringförmig von dem elastischen Schlauchabschnitt umgeben sein und wird beim Festlegen automatisch zentriert. Zudem ist gewährleistet, dass über den gesamten Umfang verteilt derselbe Anpressdruck herrscht. Um den Verschleiß gering zu halten, kann der Schlauchabschnitt innen über einen Gewebeschlauch, vorzugsweise aus einem Edelstahlgewebe, geschützt sein. Ferner kann der Schlauchabschnitt an gegenüberliegenden Enden der Hülse festgelegt sein, so dass der wirksame Bereich des Schlauchabschnittes auf ein sinnvolles Maß reduziert ist. Für eine einfache Montage kann zur Festlegung des Schlauchabschnittes und/oder des Gewebeschlauches ein ringförmiger Klemmkonus endseitig eingesetzt werden.

Der elastische Wandabschnitt kann vorzugsweise als verschiebbarer Gummiklotz ausgebildet sein, wobei vorzugsweise über den Umfang verteilt mehrerer solcher Gummiklötze angeordnet sind.

Gemäß einer weiteren Ausgestaltung der Erfindung sind mehrere Hülsen vorgesehen, deren mit Fluid beaufschlagbare Kammern miteinander verbunden sind. Dann kann die gewünschte Länge der Vorrichtung zur Halterung von Stangen je nach Bedarf zusammengesetzt werden. Gemäß einer weiteren vorteilhaften Ausgestaltung ist an einer der Hülsen im Inneren ein Anschlag angeordnet. Dadurch kann der Benutzer eine Stange bis zu einer gewünschten Länge in die Vorrichtung einschieben und kann dann die Stange manuell oder automatisch fixieren, ohne dass eine Messung erfolgen muss.

Um die elastischen Mittel an der Hülse schnell nach innen bewegen zu können, wird zur Beaufschlagung der Kammer vorzugsweise Druckluft eingesetzt. Es ist natürlich auch möglich, andere gasförmige oder flüssige Fluide einzusetzen, wobei bei Druckluft geringfügige Leckagen unschädlich sind.

Vorzugsweise ist an einer Hülse endseitig eine Drehdurchführung vorgesehen, an der eine Leitung zur Zuführung des Fluides angeschlossen ist. Denn die Hülse ist zusammen mit der Spindel drehbar, so dass für die Druckbeaufschlagung eine Drehdurchführung mit einem drehbaren Innenteil und einem festgelegten Außenteil mit einem Leitungsanschluss erforderlich ist, die beispielsweise an der zum Futter gegenüberliegenden Seite angeordnet sein kann.

Erfindungsgemäß wird auch eine Drehmaschine zur Bearbeitung von stangenförmigen Werkstücken bereitgestellt, die mit einer Vorrichtung zur Halterung von Stangen ausgerüstet ist.

Die Erfindung wird nachfolgend anhand eines Ausführungsbeispieles mit Bezug auf die beigefügten Zeichnungen näher erläutert. Es zeigen:

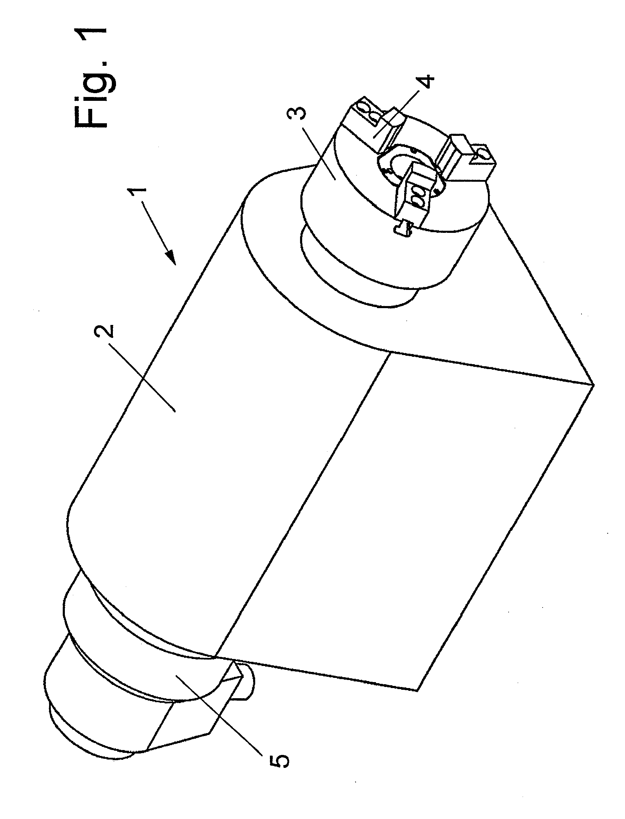

- Figur 1: eine perspektivische Ansicht einer Motor-Futtereinheit einer erfindungsgemäßen Drehmaschine;

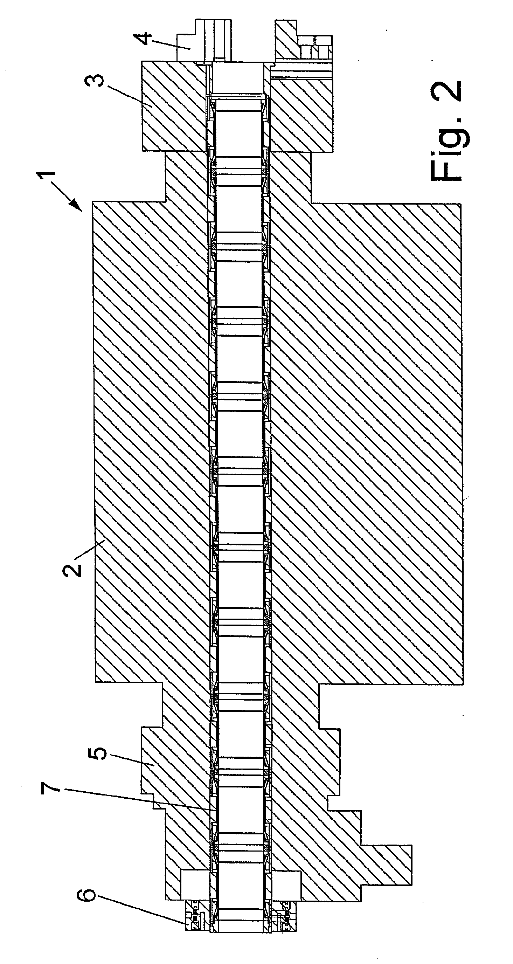

- Figur 2: eine Schnittansicht durch die Drehmaschine der Figur 1;
- Figur 3: eine Detailansicht der Vorrichtung zur Halterung von Stangen ohne die umgehende Drehmaschine nach Figur 1;
- Figuren 4A bis 4C: drei Ansichten einer Hülse einer Vorrichtung zur Halterung von Stangen; und
- Figuren 5A und 5B: zwei Ansichten einer modifizierten Vorrichtung zur Halterung von Stangen.

Ein schematisch gezeigter Spindelstock 1 einer Drehmaschine umfasst einen Spindelmotor 2, an dessen einer Seite ein Futter 3 zum Einspannen von Werkstücken vorgesehen ist. An dem Futter 3 sind hierfür bewegliche Klemmbacken 4 angeordnet. Auf der gegenüberliegenden Seite ist ein Spannzylinder 5 vorgesehen, an dem endseitig eine Drehdurchführung 6 mit einem Druckluftanschluss festgelegt ist.

In dem Spindelmotor 2 und dem Spannzylinder 5 ist eine Hohlspindel oder ein Zugrohr angeordnet, in die ein zu bearbeitendes Werkstück eingefügt werden kann. Damit die eingefügten Werkstücke, vorzugsweise Stangen oder andere Rundprofile nicht unnötigen Schwingungen ausgesetzt sind, ist eine Vorrichtung zur Halterung von Stangen innerhalb des Spindelmotors 2 und des Spannzylinders 5 angeordnet, die eine Vielzahl von benachbart angeordneten Hülsen 7 aufweist.

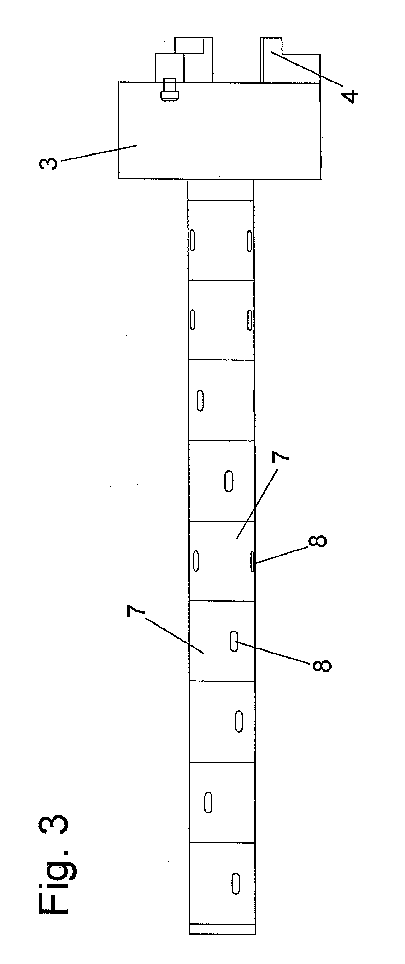

Wie in Figur 3 zu sehen ist, sind mehrere Hülsen 7 miteinander verbunden, wobei am Umfang mehrere Gummiklötze 8 vorgesehen sind, die an die Innenseite einer rohrförmigen Spindel anlegbar sind.

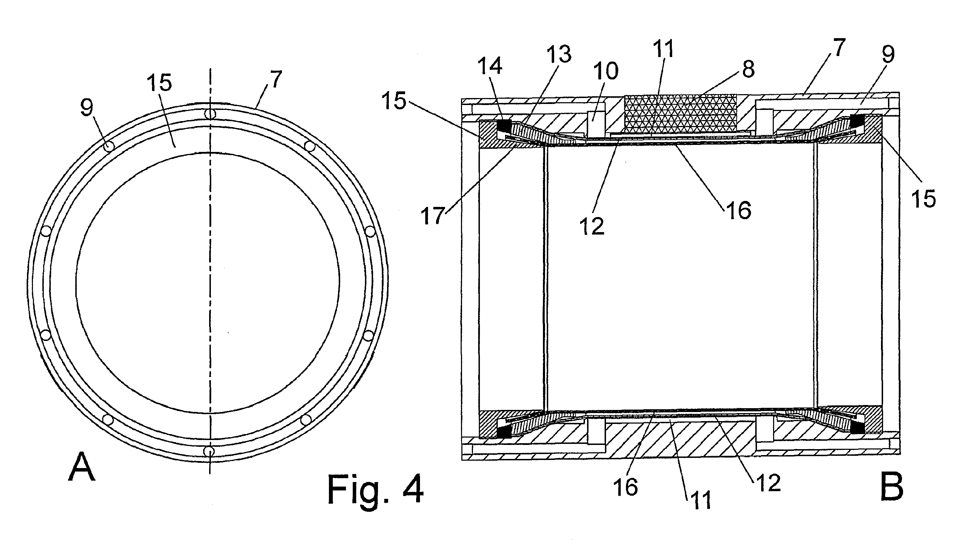

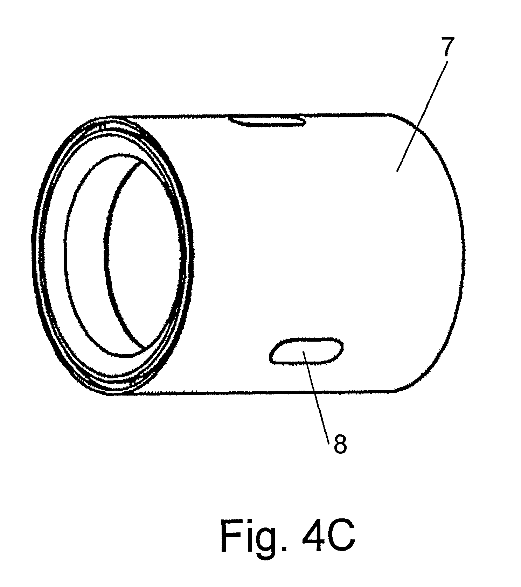

In den Figuren 4A bis 4C ist eine solche Hülse 7 im Detail dargestellt. Die Hülse 7 aus Metall besitzt einen stirnseitig durch mehrere Bohrungen 9 gebildeten Kanal zur Zuleitung eines Fluides, vorzugsweise Druckluft. Von den Kanälen 9 ist ein Übergang 10 zu einer Kammer 11 gebildet, die an der nach außen gerichteten Seite benachbart zu einem Gummiklotz 8 angeordnet ist. Auf der Innenseite ist die Kammer 11 von einem Gummischlauch 12 umgeben, an dessen Innenseite ein Gewebeschlauch 16, vorzugsweise aus Edelstahl angeordnet ist.

Der Gummischlauch 12 ist an gegenüberliegenden Seiten der Hülse 7 festgelegt, wobei hierfür ein Klemmkonus 13 und ein Gewindering 14 vorgesehen sind. Dadurch wird ein Ende des Schlauchabschnittes 12 jeweils an einer Wand der Hülse 7 festgeklemmt.

Außen an dem Gewindering 14 ist ein Führungskonus 15 angeordnet, der eine nach innen weisende Spitze 17 auf, die an einem Abschnitt des Gewebeschlauches 16 anliegt, so dass der Gewebeschlauch 16 unabhängig von dem Gummischlauch 12 fixierbar ist, wobei es möglich ist, den Gewebeschlauch 16 verschiebbar zwischen Spitze 17 und Klemmkonus 13 zu halten. Die Befestigungsmechanik ist an beiden Seiten der Hülse 7 gleich ausgebildet.

Wenn eine Stange innerhalb einer Hülse 7 angeordnet ist, kann durch die Beaufschlagung der Vorrichtung zur Halterung von Stangen mit Druckluft die Druckluft durch die Kanäle 9, die Übergänge 10 in die jeweiligen Kammern 11 gelangen, wobei durch den Druck in der Kammer 11 der Gummischlauch 12 radial nach innen bewegt wird und dabei auch den schützenden Gewebeschlauch 16 nach innen gegen die dort angeordnete Stange bewegt. Gleichzeitig wird der Gummiklotz 8 geringfügig nach außen geschoben, so dass dieser an der Innenseite der rohrförmigen Spindel anliegt. Dadurch ist die Stange klemmend innerhalb der Spindel festgelegt und kann nicht mehr vibrieren. Sobald der Drehvorgang an der Stange beendet ist, kann die Beaufschlagung mit Druckluft abgestellt werden und aufgrund der Elastizität des Gummischlauches 12 und des Gewebeschlauches 16 bewegen diese sich wieder radial nach außen und geben die Stange frei. Diese kann dann manuell oder automatisch in die nächste Position befördert werden, in der dann die Beaufschlagung der Kammer 11 mit Druckluft zur Festlegung der Stange wieder erfolgen kann.

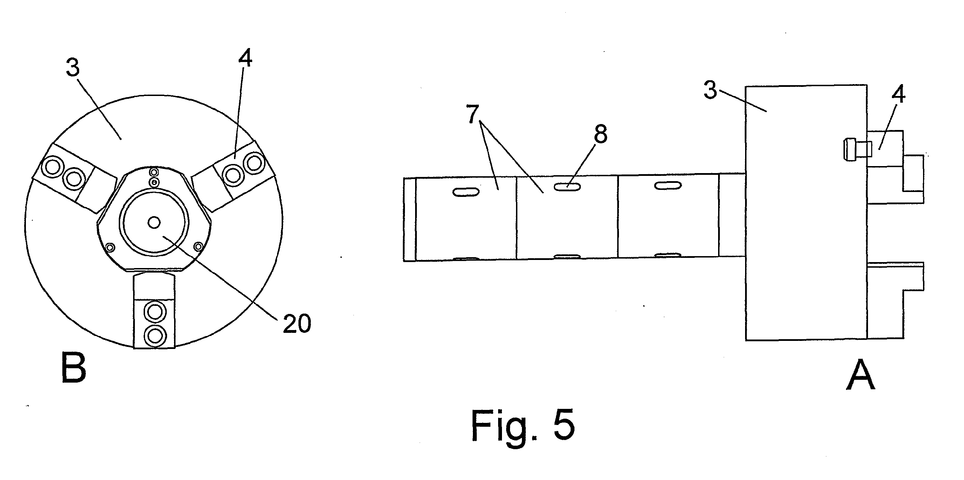

In Figuren 5A und 5B ist eine modifizierte Ausführungsform der Erfindung gezeigt, bei der die Vorrichtung zur Halterung von Stangen nur drei benachbarte Hülsen 7 aufweist, die an einem Futter 3 einer Drehmaschine angeordnet sind. Die kürzere Ausbildung der Vorrichtung zur Halterung von Stangen hat den Vorteil, dass eine Beaufschlagung mit Druckluft über weniger Hülsen 7 erfolgen muss. Die Länge der Vorrichtung zur Halterung von Stangen kann jedoch an den gewünschten Einsatzzweck angepasst werden.

Durch die Vorrichtung zur Halterung von Stangen können besonders gut auch unrunde Materialstangen verarbeitet werden, da diese fixiert im Inneren der Spindel gehalten sind. Durch die flexible Ausgestaltung des Gummischlauches und des Gewebeschlauches kann die Vorrichtung auch gut an unterschiedliche Durchmesser von Stangen angepasst werden.

In dem dargestellten Ausführungsbeispiel des Gummischlauches ist ein Drahtgeflecht vorgesehen, das die notwendige Flexibilität aufweist. Es ist aber natürlich auch möglich, nur den Gummischlauch an der Hülse 7 festzulegen, wobei dann der Verschleiß etwas größer ist. Ferner kann statt des Gummischlauches natürlich auch anderes elastisches Schlauchmaterial eingesetzt werden. Zudem ist es möglich, statt des Gewebeschlauches 16 einen zweiten Gummischlauch oder einen Schlauchabschnitt aus einem anderen Material zum Schutz des Gummischlauches vorzusehen.

Ferner kann zur Festlegung eines Schlauchabschnittes auch eine andere Mechanik eingesetzt werden, wobei die Länge der einzelnen Schlauchabschnitte so bemessen ist, dass diese ausreichend Flexibilität aufweisen aber sich nach der Beaufschlagung mit Druck des Fluides auch wieder nach außen zurückbewegen.

Die Beaufschlagung mit Druckluft kann sowohl automatisch durch eine Steuerung als auch manuell durch Ventile erfolgen.

## Patentansprüche

1. Vorrichtung zur Halterung von Stangen, insbesondere für Drehmaschinen, mit mindestens einer Hülse (7), die in eine Hohlspindel einfügbar ist, wobei in der Hülse (7) eine Stange klemmend festlegbar ist, wobei zur Festlegung der Stange an der Innenseite der Hülse (7) elastische Mittel (12, 16) vorgesehen sind, die durch Druckbeaufschlagung eines Fluides gegen die Stange festklemmbar sind, **dadurch gekennzeichnet, dass** eine mit Fluid beaufschlagbare Kammer (11) an der radial äußeren Seite einen elastischen Wandabschnitt (8) aufweist, der gegen die umgebende Hohlspindel bewegbar ist.

2. Vorrichtung nach Anspruch 1, **dadurch gekennzeichnet, dass** die Druckbeaufschlagung mit dem Fluid schaltbar ist.

3. Vorrichtung nach Anspruch 1 oder 2, **dadurch gekennzeichnet, dass** an der Hülse (7) ein nach innen bewegbarer elastischer Schlauchabschnitt (12) angeordnet ist.

4. Vorrichtung nach Anspruch 3, **dadurch gekennzeichnet, dass** der Schlauchabschnitt (12) innen über einen Gewebeschlauch (16) oder einen zweiten Schlauchabschnitt geschützt ist.

5. Vorrichtung nach Anspruch 3 oder 4, **dadurch gekennzeichnet, dass** der Schlauchabschnitt (12) an gegenüberliegenden Enden der Hülse (7) festgelegt ist.

6. Vorrichtung nach Anspruch 5, **dadurch gekennzeichnet, dass** zur Festlegung des Schlauchabschnittes (12) und/oder des Gewebeschlauches (16) ein ringförmiger Klemmkonus (15) vorgesehen ist.

7. Vorrichtung nach einem der Ansprüche 1 bis 6, **dadurch gekennzeichnet, dass** der elastische Wandabschnitt als verschiebbarer Gummiklotz (8) ausgebildet ist.

8. Vorrichtung nach einem der Ansprüche 1 bis 7, **dadurch gekennzeichnet, dass** mehrere Hülsen (7) vorgesehen sind, deren mit Fluid beaufschlagbare Kammer (11) miteinander verbunden sind.

9. Vorrichtung nach einem der Ansprüche 1 bis 8, **dadurch gekennzeichnet, dass** zur Beaufschlagung der Kammer (11) Druckluft eingesetzt wird.

10. Vorrichtung nach einem der Ansprüche 1 bis 9, **dadurch gekennzeichnet, dass** an einer Hülse (7) endseitig eine Drehdurchführung (6) vorgesehen ist, an der eine Leitung zur Zuführung des Fluides angeschlossen ist.

11. Vorrichtung nach einem der Ansprüche 1 bis 10, **dadurch gekennzeichnet, dass** an einer Hülse (7) innen ein Anschlag für die Stange angeordnet ist.

12. Drehmaschine zur Bearbeitung von stangenförmigen Werkstücken, mit einem Spindelmotor (2) und einem Futter (3) zum Einspannen von Werkstücken, **dadurch gekennzeichnet, dass** eine Hohlspindel mit einer Vorrichtung nach einem der vorhergehenden Ansprüche vorgesehen ist.
